# EUROPÄISCHE PATENTSCHRIFT

(11) **EP 2 163 377 B1**
(45) Veröffentlichungstag und Bekanntmachung des Hinweises auf die Patenterteilung: **01.08.2012**
(21) Anmeldenummer: 09005675.5
(22) Anmeldetag: 22.04.2009
(51) Int. Cl.: B32B 1/08, F16L 58/04, F16L 58/10, F23J 13/02

(54) **Korrosionsschutzauskleidung für den Einsatz in chemikalienbelasteter Umgebung bei sehr hohen Temperaturen**
Corrosion protection cladding for use in environments with high chemical content at high temperatures
Habillage de protection contre la corrosion pour l'utilisation dans un environnement chargé en produits chimiques à très hautes températures

(30) Priorität: 16.09.2008 DE 102008047538
(43) Veröffentlichungstag der Anmeldung: 17.03.2010
(73) Patentinhaber: GBT - Bücolit GmbH, 45772 Marl (DE)
(72) Erfinder: Konzack, Martin, 40883 Ratingen (DE)
(74) Vertreter: Lenzing Gerber Stute

(56) Entgegenhaltungen:
- EP-A- 1 900 782
- US-A1- 2003 207 103

## Beschreibung

In der Stahlindustrie wird das Rauchgas aus Sinteranlagen über Rauchgaskanäle abgeführt. Die Rauchgaskanäle sind thermisch bis über 200 C° belastet. Das Rauchgas enthält SO₂, das in Verbindung mit Wasserdampf zu Schwefelsäure reagiert. Die Korrosion dieser Rauchgaskanäle wird dadurch gefördert, dass kein absolut kontinuierlicher Betrieb erfolgt, sondern dass mehrfach täglich die Temperatur in dem Rauchgaskanal sinkt und damit der Säuretaupunkt unterschritten wird. Der folgende Säureangriff zerstört den Rauchgaskanal in relativ kurzer Zeit. Die in üblichen Rauchgaskanälen vorgesehene Beschichtung mit organischen, glaspartikelverstärkten Materialien ist in einer Sinteranlage auf Grund der dauerhaft hohen Temperaturen nicht anwendbar. Hinzu kommt, dass regelmäßig metallische Sinterpartikel in den Rauchgaskanal gelangen, die eine Temperatur von etwa 800°C bis 1.000°C aufweisen und die jede organisch basierte Beschichtung schädigen würden.

Auskleidungen mit Feuerfestmaterial sind ebenfalls nicht dauerhaft, da das Feuerfestmaterial bei Temperaturwechsel zur Rissbildung neigt und bei Taupunktsunterschreitung Schwefelsäure in diese Risse eindringt und das darunter liegende metallische Trägermaterial des Rauchgaskanals angreift.

Es ist deshalb Aufgabe der vorliegenden Erfindung, eine Beschichtung oder Auskleidung für Rauchgaskanäle bei hoher Temperatur für chemikalienbelastetes Abgas zu schaffen, das den oben genannten Betriebsbedingungen dauerhaft widersteht.

Diese Aufgabe wird von einer Beschichtung mit den Merkmalen des Anspruchs 1 und von einem Verfahren mit den Merkmalen des Anspruchs 8 gelöst.

Weil die Korrosionsschutzschicht für mit Stahlwandung versehene, Rauchgas führende Kanäle mit einer dem Rauchgas zugewandten Oberfläche wenigstens eine auf der Oberfläche mit einer ersten Schichtdicke angebrachte Schicht aus Kunstharz mit Faser- und/oder Partikelverstärkung, eine Schicht aus wenigstens einem Feuerfestmaterial, die mit einer zweiten Schichtdicke auf der Schicht angeordnet ist, und Haltemittel, die an der Oberfläche des Rauchgaskanals befestigt sind und die mit einer Höhe in den Kanal hinein ragen, die die erste Schichtdicke übersteigt und die geringer ist als die Summe der ersten und der zweiten Schichtdicke, kann die innere Schicht sehr hohen Temperaturen widerstehen, während die der Oberfläche benachbarte Schicht den darunter liegenden Stahl gegen Korrosion schützt.

Eine besonders gute Haltbarkeit der inneren Schicht ergibt sich, wenn die Haltemittel Spreizbolzen sind. Die Haftung der kunstharzbasierten Schicht an der Stahlwandung wird verbessert, wenn die erste Schicht aus wenigstens zwei Schichten aufgebaut ist, von denen die der Oberfläche des Kanals nächste Schicht mit Glasfasern oder Synthetikfasern verstärkt ist und eine weitere Schicht mit Glasflakes verstärkt ist.

Eine besonders gute Temperaturbeständigkeit und Haltbarkeit der Beschichtung ergibt sich, wenn die feuerfeste Schicht eine Schichtdicke von 50 mm bis 60 mm aufweist.

Vorzugsweise ist die feuerfeste Schicht von einer Feuerfestmasse auf Basis von Schamotte gebildet. Besonders bevorzugt wird wegen des geringeren Raumgewichts und der besseren Wärmeisolation eine feuerfeste Schicht mit einer Feuerfestmasse auf Basis von Perlite.

Es ist vorteilhaft, wenn die Haltemittel mit wenigstens einer harzbasierten Schicht überzogen sind.

Bei einem Verfahren zur Sanierung der Innenseite von Rauchgaskanälen aus Stahl wird das gewünschte Ergebnis mit folgenden Verfahrensschritten erzielt:
- Reinigen und Instandsetzen der Stahlwandung, beispielsweise durch Strahlen mit einem Strahlmittel und ggf. durch Einschweißen von Reparaturblechen;
- Aufbringen von Haltemitteln auf die Oberfläche der Wandung;
- Auftragen und Aushärten wenigstens einer kunstharzbasierten Schicht auf die Oberfläche und die Haltemittel;
- Aufbringen einer Schicht aus Feuerfestmaterial auf die kunstharzbasierte Schicht.

Wenn das Aufbringen einer Schicht aus Feuerfestmaterial auf die kunstharzbasierte Schicht derart erfolgt, dass die Haltemittel abschnittsweise von dem Feuerfestmaterial umgeben sind, hält die Schicht aus Feuerfestmaterial auch bei Versprödung besonders gut.

Wenn das Anbringen der Haltemittel das Aufschweißen von Spreizbolzen auf die Oberfläche umfasst, die in den Kanal hinein ragen, die von der kunstharzbasierten Schicht umschlossen sind und die die Feuerfestmasse der feuerfesten Schicht mit tragen, wird eine besonders gute Dauerhaltbarkeit der Beschichtung erzielt.

Weil auf dem Stahluntergrund zunächst Haltebolzen angebracht werden, die dann gemeinsam mit dem Stahluntergrund mit einer harzbasierten, glaspartikelverstärkten Beschichtung versehen werden, ist die Stahlkonstruktion korrosionsbeständig versiegelt. Weil weiter die in den Rauchgaskanal hinein stehenden Haltebolzen und die Kunststoffbeschichtung mit einem Feuerfestmaterial überzogen werden, ist die organische Beschichtung gegen isoliert auftreffende Hochtemperaturpartikel geschützt. Bei Rissbildung in dem Feuerfestmaterial kann die entstehende Säure zwar in die Risse eindringen. Sie erreicht aber nicht die Stahlkonstruktion, sondern lediglich die zwischen dem Feuerfestmaterial und der Stahlkonstruktion angebrachte Kunstharzbeschichtung.

Auf diese Weise wird sowohl die Korrosionsbeständigkeit gegenüber Säuren gewährleistet, wie auch der Schutz der organisch basierten Korrosionsschutzbeschichtung gegenüber einerseits Spitzentemperaturen, die im Betrieb entstehen und die die organische Beschichtung unmittelbar schädigen würden, als auch andererseits gegenüber Partikeln mit Temperaturen im Bereich von 800°C bis 1000°C, die in den Rauchgaskanal gelangen können. Diese Partikel erreichen die Kunstharzbeschichtung nicht.

Nachfolgend wird ein Ausführungsbeispiel der vorliegenden Erfindung anhand der Zeichnung beschrieben. Es zeigen:
Figur 1: einen Längsschnitt durch die sanierte Wandung eines Rauchgaskanals; sowie
Figur 2: einen Querschnitt durch den Rauchgaskanal gemäß Figur 1.

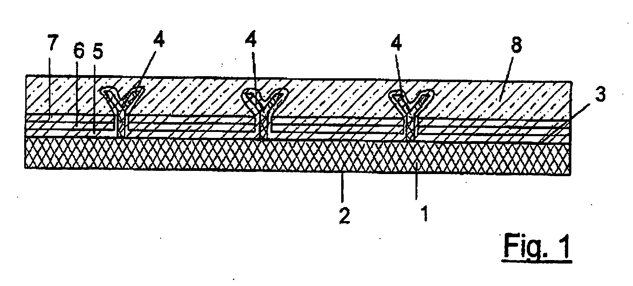

Die Figur 1 zeigt einen Längsschnitt durch eine Wandung eines erfindungsgemäß beschichteten Rauchgaskanals. Die Wandung besteht aus dem ursprünglich für die Konstruktion des Rauchgaskanals verwendeten Stahlrohr 1, dessen äußere Oberfläche 2 der Atmosphäre zugewandt ist. Eine ursprüngliche innere Oberfläche 3 war im Betrieb dem Rauchgas ausgesetzt. Die innere Oberfläche 3 ist zunächst von korrodierten Bestandteilen befreit worden. Dann wurden Spreizbolzen 4 innen auf die innere Oberfläche 3 der Wandung 1 aufgeschweißt. Ein geeignetes Verfahren hierfür ist das Bolzenschweißen mittels Hubzündung.

Danach wurde eine Kunstharzbeschichtung 5 auf die innere Oberfläche 3 aufgebracht. Die Kunstharzbeschichtung 5 übergreift die Spreizbolzen 4 und bildet eine durchgehende, hermetisch dichte Kunststoffbeschichtung, die das Stahlrohr an der inneren Oberfläche 3 vollständig abdeckt. Nach dieser Kunststoffbeschichtung 5 folgen zwei weitere Lagen 6 und 7, die aus dem gleichen Beschichtungsmaterial bestehen können. Nach dem Aushärten der Beschichtungslagen 5, 6 und 7 wird eine Feuerfestmasse 8 aufgetragen. Die Feuerfestmasse 8 ist vorzugsweise eine Stampfmasse, die auf der Rohrstoffbasis Leichtschamotte, insbesondere Perlite basiert. Die Schichtdicke, mit der die Stampfmasse aufgetragen wird, beträgt bei der beschriebenen Auskleidung einer Rauchgasleitung etwa 50 - 60 mm. Dabei ist zu beachten, dass die zumindest mit der ersten Beschichtungslage 5, vorzugsweise aber auch mit den Lagen 6 und 7 überzogenen Spreizbolzen 4 soweit aus den Harzschichten 5, 6 und 7 heraus stehen und in den Innenraum der Rauchgasleitung hineinreichen, dass sie eine derartige Feuerfestschicht 8 zu wenigstens 50 % durchsetzen. Die Spreizbolzen 4 überragen also in der Anordnung gemäß Figur 1 die letzte Harzschicht 7 um etwa 30 mm. Die Feuerfestschicht 8 überdeckt die Spreizbolzen 4 vollständig mit einer ausreichenden Schichtdicke von beispielsweise mindestens 10 mm über den freien, beschichteten Enden der Spreizbolzen 4.

Die Stampfmasse kann auf die vorbereitete Oberfläche nicht nur durch Stampfen, sondern auch durch Spritzen oder Schmieren aufgebracht werden.

Eine alternative Feuerfestmasse kann auf der Rohrstoffbasis Schamotte basieren.

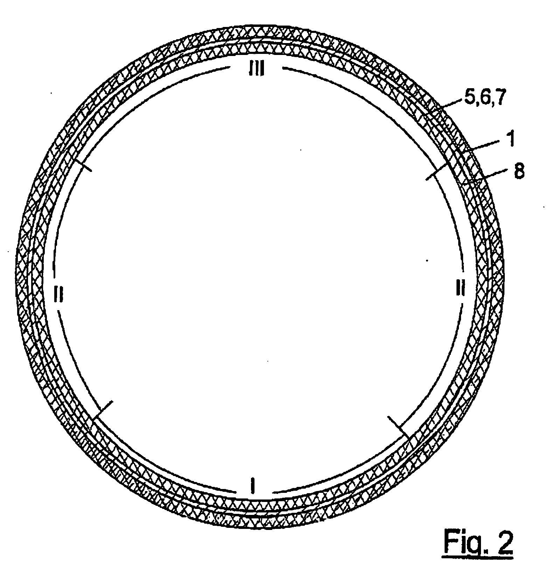

Die Figur 2 zeigt einen Querschnitt durch eine beschichtete Rauchgasleitung mit dem Schichtaufbau nach Figur 1. Die Untergliederung der Harzschichten 5, 6 und 7 ist in dieser Darstellung nicht gezeigt.

Die Rauchgasleitung weist von außen nach innen das Stahlrohr 1 auf, auf das zunächst die Kunstharzschicht 5, 6, 7 aufgebracht ist. Auf der Innenseite, dem Rauchgas zugewandt, befindet sich dann die Feuerfestschicht 8. Bei Rauchgasleitungen mit horizontalem Verlauf hat es sich als praktikabel herausgestellt, die Anzahl der Spreizbolzen 4 zur Halterung der Feuerfestschicht 3 nach der Lage zu variieren. So ist im unteren Viertel, dem liegenden Teil der Wandung, eine Anzahl von 40 - 70 Spreizbolzen 4 pro m² Wandungsfläche ausreichen. Dieser Quadrant ist in der Figur 2 mit I bezeichnet. Die seitlichen, etwa senkrecht verlaufenden Wandungsteile, die mit II bezeichnet sind, werden mit etwa 70 Spreizbolzen 4 pro m² versehen. In dem oberen Quadranten III, in dem die Beschichtung und insbesondere die Feuerfestschicht 8 hängt, werden Spreizbolzen 4 mit einer Anzahl von mindestens 100 Spreizbolzen pro m² gesetzt.

Durch die beschriebene Anordnung ergibt sich eine Beschichtung für ein Stahlrohr 1 eines Rauchgaskanals, die aus zwei Beschichtungsarten kombiniert ist, dem Stahlrohr 1 zugewandt sind die partikel- oder faserverstärkten Harzschichten 5 bis 7, die eine dauerhafte Temperaturbeständigkeit von mindestens 230 °C in der Gasphase aufweisen. In Anwesenheit von Feuchtigkeit, durch die bei Taupunktsunterschreitung konzentrierte Säure entsteht, beträgt die Temperaturbeständigkeit etwa 70 - 90 °C. In diesen Bereichen tritt keine dauerhafte Schädigung der Beschichtung ein. Die Feuerfestbeschichtung, die an den Spreizbolzen 4 hängt, weist in bekannter Weise eine Temperaturbeständigkeit von weit über 1000 °C auf. Sie ist also auch gegen einfallende heiße Partikel resistent. Der relativ geringe Wärmeleitwert der Feuerfestbeschichtung erlaubt in Verbindung mit der großen äußeren Oberfläche des Stahlrohrs 1 eine Temperaturbeaufschlagung im Inneren des Rauchgaskanals, die dauerhaft bei etwa 280 °C oder sogar darüber liegen kann. Aufgrund des Temperaturgradienten in dem Feuerfestmaterial 8 wird die zulässige maximale Dauertemperatur der darunter liegenden Kunstharzbeschichtung nicht überschritten.

Temperaturwechsel im Betrieb führen dazu, dass die Feuerfestbeschichtung 8 mit der Zeit Risse entwickelt. Bei Unterschreitung des Säuretaupunkts kann durch diese Risse flüssige Schwefelsäure in die Feuerfestbeschichtung eindringen, was der Schicht 8 keinen Schaden zufügt. Durchdringt die anfallende Säure die Schicht 8 vollständig, so trifft sie auf die säurebeständige Harzbeschichtung 5 bis 7, die aufgrund ihres Haftvermögens und ihrer Elastizität rissfrei bleibt. Die Harzbeschichtung schützt das Stahlrohr 1 dann vor jeglichem Säureangriff.

Der beschriebene Vorteil wird also durch eine Kombination von Beschichtungen erreicht, die jede für sich den wirksamen Schutz des Stahlrohres 1 nicht erzielen kann. Die Harzbeschichtung allein ist gegenüber den anfallenden Temperaturen nicht beständig genug. Die Feuerfestauskleidung schützt aufgrund der unvermeidlichen Rissbildung allein das Stahlrohr 1 nicht ausreichend von anfallender Säure. Erst die Kombination beider Beschichtungen führt zu einer dauerhaften Lösung für die bislang nicht zufriedenstellend gelösten Korrosionsprobleme in derartigen Rauchgaskanälen, insbesondere in Sinteranlagen der Stahlindustrie.

Die Beschichtungsmaterialien weisen vorzugsweise die folgenden Eigenschaften auf:

Die erste, unmittelbar auf die Oberfläche des Stahlrohres 1 aufgetragene Schicht 5 soll eine Schicht mit hoher chemischer Beständigkeit sein, die eine gute Haftfähigkeit aufweist und deshalb relativ geringe Anforderungen an die Vorbehandlung des Untergrundes stellt. Die mechanischen Eigenschaften (Zugfestigkeit, Biegefestigkeit und Reißdehnung) sind durch die eingebettete Glasfasermatrix oder ein synthetisches Vlies bestimmt. Eine solche Beschichtung ist unter dem Namen BÜCOLIT V47-36 HT der Anmelderin verfügbar. Die Temperaturbeständigkeit beträgt dauerhaft 205 °C.

Auf diese erste Schicht werden eine zweite und gegebenenfalls eine dritte Harzschicht aufgetragen, die eine höhere Temperaturbeständigkeit aufweisen. Diese Beschichtung weist neben der Harzmatrix eine Füllung mit dünnen Glas-Flakes auf, deren parallele, schichtartige Anordnung einen sehr guten Permeationswiderstand bewirkt, insbesondere gegenüber starken Schwefelsäurekonzentrationen und hohen Temperaturen. Die dauerhafte Temperaturbeständigkeit dieser Beschichtung beträgt 230 °C. Kurzzeitig sind bis zu 285 °C ohne Schädigung der Harzmatrix möglich. Die zweitgenannte Beschichtung ist unter der Bezeichnung BÜCOLIT V590 HTS bei der Anmelderin verfügbar. Als Harz kommt bei beiden benannten Schichten ein Vinylesterharz zur Anwendung.

Für die Feuerfestschicht 8 kommt ein auf Leichtschamotte (Perlite) basierendes Feuerfestmaterial zum Einsatz. Die chemische Zusammensetzung in Gewichtsprozent beträgt etwa 39% Al₂O₃, 38% SiO₂, 1,7% Fe₂O₃ und 8% CaO. Der Rest zu 100% ist Bindemittel.

Die Beschichtung weist ein Raumgewicht von 0,9 g/cm³ auf. Die Bindungsart ist hydraulisch. Die Körnung beträgt 0,0 bis 4,0 mm. Die Anwendungstemperatur dieser Beschichtung liegt bei 1200 °C.

Eine andere auf Schamotte basierende Beschichtung weist als chemische Zusammensetzung in Gewichtsprozent auf:

Al₂O₃ 25%, SiO₂ 66%, Fe₂O₃ 1,15%, der Rest zu 100 % ist Bindemittel.

Die Bindungsart ist hydraulisch. Die Körnung beträgt 0,0 bis 6,0 mm. Die Anwendungstemperatur beträgt 1200 °C. Das Raumgewicht liegt bei etwa 1,9 bis 2,0 g/cm³.

Besonders vorteilhaft ist es, die erstgenannte Feuerfestschicht in Anlage mit der kunstharzbasierten Schicht einzusetzen, da sie besonders gute Wärmeisolationseigenschaften aufweist, und die zweite Feuerfestbeschichtung auf die erste aufzutragen. Die zweite Feuerfestbeschichtung weist besonders gute Verschleißfestigkeit auf und ist in Bereichen, die dem Rauchgas und den heißen Sinterpartikeln ausgesetzt sind, dauerhafter.

### Bezugszeichenliste

- 1.: Stahlrohr
- 2.: Oberfläche
- 3.: innere Oberfläche
- 4.: Spreizbolzen
- 5.: Kustharzbeschichtung
- 6.: Harzschicht
- 7.: Harzschicht
- 8.: Feuerfestmasse

## Patentansprüche

1. Korrosionsschutzschicht für mit Stahlwandung versehene Rauchgas führende Kanäle (1) mit einer dem Rauchgas zugewandten Oberfläche (3), mit folgendem Aufbau:
- wenigstens einer auf der Oberfläche (3) mit einer ersten Schichtdicke angebrachten Schicht (5, 6, 7) aus Kunstharz mit Faser- und/oder Partikelverstärkung;
- wenigstens einer Schicht (8) aus Feuerfestmaterial, die mit einer zweiten Schichtdicke, auf der Schicht (5, 6, 7) angeordnet ist; und
- Haltemitteln, die an der Oberfläche (3) befestigt sind und die mit einer Höhe in den Kanal hinein ragen, die die erste Schichtdicke übersteigt und die geringer ist als die Summe der ersten und der zweiten Schichtdicke, **dadurch gekennzeichnet, dass** die Haltemittel (4) mit wenigstens einer harzbasierten Schicht (5, 6, 7) überzogen sind.

2. Korrosionsschutzschicht nach Anspruch 1, **dadurch gekennzeichnet, dass** die Haltemittel Spreizbolzen (4) sind.

3. Korrosionsschutzschicht nach einem der vorhergehenden Ansprüche, **dadurch gekennzeichnet, dass** die erste Schicht aus wenigstens zwei Schichten (5, 6, 7) aufgebaut ist, von denen die der Oberfläche (3) nächste Schicht (5) nit Glasfasern oder Synthetikfasern verstärkt ist und eine weitere Schicht (6, 7) mit Glasflakes verstärkt ist.

4. Korrosionsschutzschicht nach einem der vorhergehenden Ansprüche, **dadurch gekennzeichnet, dass** die feuerfeste Schicht (8) eine Schichtdicke von 50 mm bis 60 mm aufweist.

5. Korrosionsschutzschicht nach einem der vorhergehenden Ansprüche, **dadurch gekennzeichnet, dass** die feuerfeste Schicht (8) von einer Feuerfestmasse auf Basis von Schamotte gebildet ist.

6. Korrosionsschutzschicht nach einem der vorhergehenden Ansprüche, **dadurch gekennzeichnet, dass** feuerfeste Schicht (8) von einer Feuerfestmasse auf Basis von Perlite gebildet ist.

7. Verfahren zur Sanierung der Innenseite von Rauchgaskanälen aus Stahl mit folgenden Verfahrensschritten:
- Reinigen und Instandsezzen der Stahlwandung (1);
- Aufbringen von Haltemitzeln (4) auf der Oberfläche (3) der Wandung (1);
- Auftragen und Aushärten wenigstens einer kunstrarzbasierten Schicht (5, 6, 7) auf die Oberfläche (3) und die Haltemittel (4);
- Aufbringen einer Schicht (8) aus Feuerfestmaterial auf die kunstharzbasierte Schicht (5, 6, 7).

8. Verfahren nach Anspruch 7, **dadurch gekennzeichnet, dass** das Aufbringen einer Schicht (8) aus Feuerfestmaterial auf die kunstharzbasierte Schicht (5, 6, 7) derart erfolgt, dass die Haltemittel abschnittsweise von dem Feuerfestmaterial umgeben sind.

9. Verfahren nach einem der vorhergehenden Ansprüche 7 - 8, **dadurch gekennzeichnet, dass** das Anbringen der Haltemittel (4) das Aufschweißen von Spreizbolzen (4) auf die Oberfläche (3) umfasst, die in den Kanal hinein ragen, die von der kunstharzbasierten Schicht umschlossen sind und die die Feuerfestmasse der feuerfesten Schicht (8) mit tragen.

10. Verfahren nach einem der vorhergehenden Ansprüche 7 - 9, **dadurch gekennzeichnet, dass** die feuerfeste Schicht (8) zweilagig ausgebildet ist, wobei die der harzbasierten Schicht (7) zugewandte Lage auf Perlitebasis aufgebaut ist und darauf eine Schicht auf Schamottebasis aufgetragen wird.

## Claims

1. Corrosion protection layer for channels (1) provided with a steel wall and conveying flue gas having a surface (3) facing the flue gas, with the following structure:
- at least one layer (5, 6, 7) consisting of synthetic resin applied on the surface (3) with a first layer thickness and having a fibre and/or particle reinforcement;
- at least one layer (8) consisting of refractory material which is arranged with a second layer thickness on the layer (5, 6, 7) and
- retaining means which are attached to the surface (3) and which project into the channel at a height which exceeds the first layer thickness and which is less than the total thicknesses of the first and the second layers, **characterised in that** the retaining means (4) are coated with at least one resin based layer (5, 6, 7).

2. Corrosion protection layer according to Claim 1, **characterised in that** the retaining means are expansion bolts (4).

3. Corrosion protection layer according to either of the preceding claims, **characterised in that** the first layer is composed of at least two layers (5, 6, 7), of which the layer (5) closest to the surface (3) is reinforced with glass fibres or synthetic fibres and a further layer (6, 7) is reinforced with glass flakes.

4. Corrosion protection layer according to any one of the preceding claims, **characterised in that** the refractory layer (8) has a layer thickness of 50 mm to 60 mm.

5. Corrosion protection layer according to any one of the preceding claims, **characterised in that** the refractory layer (8) is formed by a refractory mass which is based on chamotte.

6. Corrosion protection layer according to any one of the preceding claims, **characterised in that** the refractory layer (8) is formed by a refractory mass which is based on perlite.

7. Method for renovating the interior of flue gas channels consisting of steel having the following method steps:
- cleaning and repairing the steel wall (1);
- attaching retaining means (4) to the surface (3) of the wall (1);
- applying and curing at least one synthetic resin based layer (5, 6, 7) onto the surface (3) and the retaining means (4);
- applying a layer (8) consisting of refractory material to the synthetic resin based layer (5, 6, 7).

8. Method according to Claim 7, **characterised in that** a layer (8) consisting of refractory material is applied to the synthetic resin based layer (5, 6, 7) in such a way that the retaining means in sections are enclosed by the refractory material.

9. Method according to either of Claims 7 and 8, **characterised in that** attaching the retaining means (4) involves welding expansion bolts (4) onto the surface (3), which project into the channel, which are enclosed by the synthetic resin based layer and which contribute to supporting the refractory mass of the refractory layer (8).

10. Method according to any one of Claims 7 to 9, **characterised in that** the refractory layer (8) is formed as two layers, wherein the layer facing the resin based layer (7) is formed based on perlite and a layer based on chamotte is applied on top of it.

## Revendications

1. Couche de protection contre la corrosion destinée à des canaux (1) conduisant des gaz de fumées, dotés d'une paroi en acier et comprenant une surface (3) dirigée vers les gaz de fumées, la couche présentant la constitution suivante :
- au moins une couche (5, 6, 7) de résine synthétique renforcée de fibres et/ou de particules, rapportée sur ladite surface (3) et présentant une première épaisseur de couche ;
- au moins une couche (8) en matériau réfractaire, qui est agencée avec une deuxième épaisseur de couche sur la couche (5, 6, 7) ; et
- des moyens de retenue, qui sont fixés sur ladite surface (3) et s'engagent à l'intérieur du canal avec une hauteur supérieure à la première épaisseur de couche et plus faible que la somme de la première et de la deuxième épaisseur de couche,
**caractérisée en ce que** les moyens de retenue (4) sont revêtus d'au moins une couche (5, 6, 7) à base de résine.

2. Couche de protection contre la corrosion selon la revendication 1, **caractérisée en ce que** les moyens de retenue sont des boulons d'ancrage (4) du type à extrémité évasée.

3. Couche de protection contre la corrosion selon l'une des revendications précédentes, **caractérisée en ce que** la première couche est d'une constitution comprenant au moins deux couches (5, 6, 7), dont la couche (5) la plus proche de ladite surface (3), est renforcée de fibres de verre ou de fibres synthétiques, et une autre couche (6, 7) est renforcée de paillettes ou écailles de verre.

4. Couche de protection contre la corrosion selon l'une des revendications précédentes, **caractérisée en ce que** la couche réfractaire (8) présente une épaisseur de couche de 50 mm à 60 mm.

5. Couche de protection contre la corrosion selon l'une des revendications précédentes, **caractérisée en ce que** la couche réfractaire (8) est formée par une masse réfractaire à base de chamotte.

6. Couche de protection contre la corrosion selon l'une des revendications précédentes, **caractérisée en ce que** la couche réfractaire (8) est formée par une masse réfractaire à base de perlite.

7. Procédé de rénovation de la face intérieure de canaux de gaz de fumées en acier, comprenant les étapes de procédé suivantes :
- nettoyage et remise en état de la paroi en acier (1) ;
- mise en place de moyens de retenue (4) sur la surface (3) de la paroi (1) ;
- application et durcissement d'au moins une couche à base de résine synthétique (5, 6, 7) sur ladite surface (3) et les moyens de retenue (4) ;
- application d'une couche (8) en un matériau réfractaire sur la couche à base de résine synthétique (5, 6, 7).

8. Procédé selon la revendication 7, **caractérisé en ce que** l'application d'une couche (8) en matériau réfractaire sur la couche à base de résine synthétique (5, 6, 7) est effectuée de manière à ce que les moyens de retenue soient entourés en partie par le matériau réfractaire.

9. Procédé selon l'une des revendications précédentes 7 à 8, **caractérisé en ce que** la mise en place des moyens de retenue (4) englobe le soudage, sur ladite surface (3), de boulons d'ancrage (4) à extrémité évasée, qui s'engagent à l'intérieur du canal, sont enfermés par la couche à base de résine synthétique et portent en même temps la masse réfractaire de la couche réfractaire (8).

10. Procédé selon l'une des revendications précédentes 7 à 9, **caractérisé en ce que** la couche réfractaire (8) est d'une configuration à deux couches, la couche dirigée vers la couche à base de résine synthétique (7) étant d'une constitution à base de perlite, sur laquelle est appliquée une couche à base de chamotte.
